# EUROPEAN PATENT APPLICATION

(11) **EP 3 683 546 A2**
(43) Date of publication of application: **22.07.2020**
(21) Application number: 20151563.2
(22) Date of filing: 14.01.2020
(51) Int. Cl.: G01C 21/26, B60W 60/00

(54) **VEHICLE DRIVING ASSISTANCE SYSTEM AND VEHICLE DRIVING ASSISTANCE METHOD**

(30) Priority: 17.01.2019 JP 2019005722
(71) Applicant: Mazda Motor Corporation, Hiroshima 730-8670 (JP)
(72) Inventor: TAKAHASHI, Hideki, Fuchu-cho, Aki-gun,, Hiroshima 730-8670 (JP)
(74) Representative: Müller-Boré & Partner Patentanwälte PartG mbB

(57) **Abstract**

In a vehicle driving assistance system 100, an ECU 10 sets plural travel route candidates RC on the basis of travel road information acquired from a camera 21 and the like, calculates route evaluation parameter value for each of the plural travel route candidates RC, and sets a target travel route from the plural travel route candidates RC on the basis of the route evaluation parameter value. In particular, the ECU 10 sets the route evaluation parameter value to 0 in the case where the acceleration or the deceleration generated in a longitudinal direction is lower than a first threshold Th1, sets the route evaluation parameter value to a second specified value Co1 in the case where a magnitude of the deceleration is equal to or higher than the first threshold Th1, and sets the route evaluation parameter value to a third specified value Co2 that is higher than the second specified value Co1 in the case where a magnitude of the acceleration is equal to or higher than the first threshold Th1.

## Description

### [Technical Field]

The present invention relates to a vehicle driving assistance system and a vehicle driving assistance method for setting a travel route for a vehicle and assisting with driving on the basis of this travel route.

### [Background Art]

Conventionally, as travel route generation algorithms for a vehicle, a potential method, a spline interpolation function, an A-star (A*) method, Dijkstra's algorithm, RRT, a state lattice method, and the like are used.

In the A-star method and the Dijkstra's algorithm, grids that are partitioned vertically and horizontally are each set as a node, and the nodes are expanded in a manner to minimize cost (route cost). In this way, a route is searched. For example, in JP-A-2011-128758, a route search system that selects a route with the minimum cost among routes from a start point to an end point included in an area represented by the grids is disclosed. In the route search system, the node with the minimum cost is expanded, more specifically, the number of expanding directions from the node with the minimum cost is set according to a moving direction, and the moving direction for the expanded node with the minimum cost is determined.

In the state lattice method, a grid area including a large number of grid points is set in a travel road, these grid points are sequentially connected to set a large number of travel route candidates, and one travel route is selected from these travel route candidates. For example, in WO 2013/051081, a vehicle driving assistance system is disclosed. In the vehicle driving assistance system, the plural travel routes are set on a grid map, movement cost indicative of a degree of danger in the case where a host vehicle travels is set for each cell of the grid map, and one of the travel routes is selected on the basis of this movement cost.

### [Summary of the Invention]

### [Problem to be solved by the invention]

It is a problem to appropriately select a route for a vehicle that minimizes possible dangers, e.g. in a case in which an obstacle is present on a travel route.

### [Means for solving the Problem]

The present invention has been made to solve the above-described problem, and therefore has a purpose of providing a vehicle driving assistance system and a vehicle driving assistance method capable of improving driving safety. In particular, a travel route is selected on the basis of a route evaluation parameter value which is set according to the acceleration or the deceleration of a vehicle, wherein a mode of applying the route evaluation parameter is made appropriately differ between an acceleration side and a deceleration side.

Indeed, in the case where a route evaluation parameter is defined according to the acceleration or the deceleration, a mode of applying the route evaluation parameter desirably differs between an acceleration side and a deceleration side. This is because the degree of the danger for the vehicle differs between the acceleration side and the deceleration side, more specifically, the degree of the danger is higher on the acceleration side than on the deceleration side. In particular, in the case where the travel route, on which a relatively large speed change occurs, is selected (for example, a case where the travel route is selected to avoid an obstacle, or the like), it is considered that the travel route with the lower degree of the danger, on which the deceleration is generated, should be selected preferentially over the travel route with the higher degree of the danger, on which the acceleration is generated.

The achievement of the object in accordance with the invention is set out in the independent claims. Further developments of the invention are the subject matter of the dependent claims.

In order to achieve the above purpose, the present invention is a vehicle driving assistance system including: a travel road information acquisition device that acquires travel road information on a travel road of a vehicle; and a controller configured to set a target travel route for the vehicle in the travel road on the basis of the travel road information and to execute driving control of the vehicle such that the vehicle travels along the target travel route. The controller is configured to: set plural travel route candidates as candidates for setting the target travel route on the basis of the travel road information; calculate a route evaluation parameter value for each of the plural travel route candidates; and select one travel route of the plural travel route candidates as the target travel route on the basis of the route evaluation parameter value. The controller is further configured to: set the route evaluation parameter value to a first specified value in the case where a magnitude of acceleration or deceleration that is generated in a longitudinal direction at the time when the vehicle travels on the travel route candidate is lower than a first threshold; set the route evaluation parameter value to a second specified value that is higher than the first specified value in the case where the magnitude of the deceleration is equal to or higher than the first threshold; and set the route evaluation parameter value to a third specified value that is higher than the second specified value in the case where the magnitude of the acceleration is equal to or higher than the first threshold.

In the present invention that is configured as described above, the controller (1) sets the route evaluation parameter value to the first specified value in the case where the acceleration or the deceleration is lower than the first threshold, (2) sets the route evaluation parameter value to the second specified value (> the first specified value) in the case where the deceleration is equal to or higher than the first threshold, and (3) sets the route evaluation parameter value to the third specified value (> the second specified value) in the case where the acceleration is equal to or higher than the first threshold. According to such present invention, the route evaluation parameter value that is applied when the acceleration is equal to or higher than the first threshold is set to be higher than the route evaluation parameter value that is applied when the deceleration is equal to or higher than the first threshold. Accordingly, in the case where the travel route where the acceleration or the deceleration is relatively high is set, among the plural travel route candidates as the candidates thereof, the route evaluation parameter value of the travel route that is set on the acceleration side tends to be higher than the route evaluation parameter value of the travel route that is set on the deceleration side. Thus, according to the present invention, it is possible to preferentially select the travel route that is set on the deceleration side over the travel route that is set on the acceleration side in the case where the travel route where the acceleration or the deceleration is relatively high is set. Therefore, it is possible to appropriately select the travel route where safety of the vehicle is further secured.

In another aspect, in order to achieve the above purpose, the present invention is a vehicle driving assistance system including: a travel road information acquisition device that acquires travel road information on a travel road of a vehicle; and a controller configured to set a target travel route for the vehicle in the travel road on the basis of the travel road information. The controller is configured to: set plural travel route candidates as candidates for setting the target travel route on the basis of the travel road information; calculate a route evaluation parameter value for each of the plural travel route candidates; and select one travel route of the plural travel route candidates as the target travel route on the basis of the route evaluation parameter value. The controller is further configured to: set the route evaluation parameter value to a first specified value in the case where a magnitude of deceleration that is generated in a longitudinal direction at the time when the vehicle travels on the travel route candidate is lower than a first threshold; set the route evaluation parameter value to a second specified value that is higher than the first specified value in the case where the magnitude of the deceleration is equal to or higher than the first threshold; and set the route evaluation parameter value to a first specified value in the case where a magnitude of the acceleration that is generated in the longitudinal direction at the time when the vehicle travels on the travel route candidate is lower than a second threshold that is lower than the first threshold, and set the route evaluation parameter value to the second specified value in the case where the magnitude of the acceleration is equal to or higher than the second threshold.

In the present invention that is configured as described above, the controller (1) sets the route evaluation parameter value to the first specified value in the case where the deceleration is lower than the first threshold, and set the route evaluation parameter value to the second specified value (>the first specified value) in the case where the deceleration is equal to or higher than the first threshold, and (2) sets the route evaluation parameter value to the first specified value in the case where the acceleration is lower than the second threshold (< the first threshold), and sets the route evaluation parameter value to the second specified value in the case where the acceleration is equal to or higher than the second threshold. According to such a second example, on the acceleration side, the route evaluation parameter value is set to the second specified value at the lower acceleration/deceleration than that on the deceleration side. Accordingly, in the case where the travel route where the acceleration or the deceleration is relatively high is set, among the plural travel route candidates as the candidates thereof, the route evaluation parameter value of the travel route that is set on the acceleration side tends to be higher than the route evaluation parameter value of the travel route that is set on the deceleration side. Thus, according to the present invention, it is possible to preferentially select the travel route that is set on the deceleration side over the travel route that is set on the acceleration side in the case where the travel route where the acceleration or the deceleration is relatively high is set. Therefore, it is possible to appropriately select the travel route where the safety of the vehicle is further secured.

In the present invention, preferably, the first threshold is defined on the basis of the magnitude of the acceleration/deceleration that can be accepted by a driver of the vehicle. In some examples, the threshold can be set on the basis of a user input. In other examples, the threshold can be set based on experimental tests on drivers, e.g. as the minimum value among the values accepted by a plurality of drivers. Additionally or alternatively, theoretical values for the threshold may be taken from medical literature. In the present invention that is configured just as described, the first threshold is defined on the basis of the acceleration/deceleration that can be accepted by the driver, and thus setting of the travel route where the acceleration/deceleration that is equal to or higher than this first threshold is generated is hindered. In this way, it is possible to suppress the driver from receiving a sense of discomfort caused by the acceleration/deceleration.

In the present invention, preferably, the first specified value is 0. In the present invention that is configured just as described, the route evaluation parameter value related to the acceleration/deceleration is not substantially applied to the travel route where the acceleration/deceleration is lower than the first threshold. Thus, it is possible to preferentially set the travel route where the acceleration/deceleration is lower than the first threshold.

In the present invention, preferably, the controller sets plural sampling points on the route of each of the plural travel route candidates, and sets the route evaluation parameter value at each of the sampling points set for each of the plural travel route candidates on the basis of the magnitude of the acceleration or the deceleration. In the present invention that is configured just as described, the route evaluation parameter value is calculated for each of the plural sampling points set for each of the travel route candidates. Thus, it is possible to accurately evaluate each of the plural travel route candidates.

In yet another aspect, the present invention is a vehicle driving assistance method that is executed by a controller including a computer, and includes: a step of setting plural travel route candidates as candidates for setting a target travel route for a vehicle in a travel road on the basis of travel road information on the travel road of the vehicle; a step of calculating a route evaluation parameter value for each of the plural travel route candidates; a step of selecting one travel route of the plural travel route candidates as the target travel route on the basis of the route evaluation parameter value; and a step of executing driving control of the vehicle such that the vehicle travels along the target travel route. In the step of calculating the route evaluation parameter value, the method further: sets the route evaluation parameter value to a first specified value in the case where a magnitude of acceleration or deceleration that is generated in a longitudinal direction at the time when the vehicle travels on the travel route candidate is lower than a first threshold; and sets the route evaluation parameter value to a second specified value that is higher than the first specified value in the case where the magnitude of the deceleration is equal to or higher than the first threshold, and sets the route evaluation parameter value to a third specified value that is larger than the second specified value in the case where the magnitude of the acceleration is equal to or higher than the first threshold.

In further another aspect, the present invention is a vehicle driving assistance method that is executed by a controller including a computer, and includes: a step of setting plural travel route candidates as candidates for setting a target travel route for a vehicle in a travel road on the basis of travel road information on the travel road of the vehicle; a step of calculating a route evaluation parameter value for each of the plural travel route candidates; a step of selecting one travel route of the plural travel route candidates as the target travel route on the basis of the route evaluation parameter value; and a step of executing driving control of the vehicle such that the vehicle travels along the target travel route, and, in the step of calculating the route evaluation parameter value, the method further: sets the route evaluation parameter value to a first specified value in the case where a magnitude of deceleration that is generated in a longitudinal direction at the time when the vehicle travels on the travel route candidate is lower than a first threshold, and sets the route evaluation parameter value to a second specified value that is higher than the first specified value in the case where the magnitude of the deceleration is equal to or higher than the first threshold; and sets the route evaluation parameter value to the first specified value in the case where a magnitude of acceleration that is generated in the longitudinal direction at the time when the vehicle travels on the travel route candidate is lower than a second threshold that is lower than the first threshold, and sets the route evaluation parameter value to the second specified value in the case where the magnitude of the acceleration is equal to or higher than the second threshold.

### [Advantage of the invention]

According to the vehicle driving assistance system and the vehicle driving assistance method of the present invention, it is possible to select a safer route by making a mode of applying the route evaluation parameter appropriately differ between the acceleration side and the deceleration side when the route evaluation parameter value is set according to the acceleration or the deceleration.

### [Brief Description of the Drawings]

[Fig. 1] Fig. 1 is a block diagram illustrating a schematic configuration of a vehicle driving assistance system according to an embodiment of the present invention.
[Fig. 2] Fig. 2 is an explanatory view of a basic concept of driving assistance according to the embodiment of the present invention.
[Fig. 3] Fig. 3 is a map defining the route evaluation parameter according to a first example of the embodiment of the present invention.
[Fig. 4] Fig. 4 is a map defining the route evaluation parameter according to a second example of the embodiment of the present invention.
[Fig. 5] Fig. 5 is a flowchart of driving assistance processing according to the embodiment of the present invention.

### [Modes for Carrying Out the Invention]

A description will hereinafter be made on a vehicle driving assistance system and a vehicle driving assistance method according to an embodiment of the present invention with reference to the accompanying drawings.

### [System Configuration]

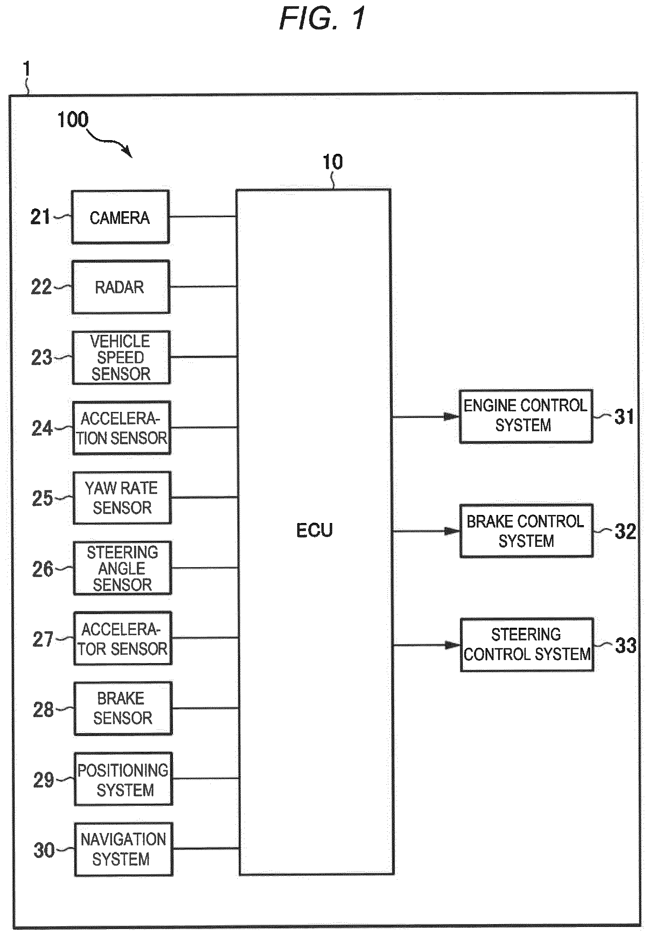

A description will firstly be made on a configuration of the vehicle driving assistance system according to the embodiment of the present invention with reference to Fig. 1. Fig. 1 is a block diagram illustrating a schematic configuration of the vehicle driving assistance system according to the embodiment of the present invention.

A vehicle driving assistance system 100 is configured to execute driving assistance control (automated driving control) for setting a target travel route for a vehicle 1 and causing the vehicle 1 to travel along this target travel route. As illustrated in Fig. 1, the vehicle driving assistance system 100 includes an electronic control unit (ECU) 10 as a vehicle controller or a controller, plural types of sensors, and plural control systems.

More specifically, the plural types of the sensors are or comprise a camera 21, a radar 22, a vehicle speed sensor 23 for detecting behavior of the vehicle 1 and a driving operation by an occupant, an acceleration sensor 24, a yaw rate sensor 25, a steering angle sensor 26, an accelerator sensor 27, and a brake sensor 28. Furthermore, the plural types of the sensors are or comprise a positioning system 29 for detecting a position of the vehicle 1 and a navigation system 30. The plural control systems are or comprise an engine control system 31, a brake control system 32, and a steering control system 33.

Moreover, other types of the sensors may be a peripheral sonar system for measuring a distance from and a position of a structure around the vehicle 1, a corner radar provided at each of four corners of the vehicle 1 to measure approach of the peripheral structure, and an inner camera for capturing an image of the inside of a vehicle cabin in the vehicle 1.

The ECU 10 executes various calculations on the basis of signals received from the plural types of the sensors, and sends control signals to the engine control system 31, the brake control system 32, and the steering control system 33 so as to appropriately actuate an engine system, a brake system, and a steering system, respectively. The ECU 10 is constructed of a computer that includes one or more processors (typically CPUs), memory (ROM, RAM, or the like) for storing various programs, an input/output device, and the like. The ECU 10 corresponds to an example of the "controller" in the present invention.

The camera 21 captures an image around the vehicle 1, and outputs image data. Based on the image data received from the camera 21, the ECU 10 identifies objects (for example, a preceding vehicle, a parked vehicle, a pedestrian, a travel road, road marking lines (a lane divider, a white line, and a yellow line), a traffic signal, a traffic sign, a stop line, an intersection, an obstacle, and the like). The ECU 10 may acquire information on the object from the outside through a traffic infrastructure, inter-vehicle communication, or the like. In this way, a type, a relative position, a moving direction, and the like of the object are identified.

The radar 22 measures a position and a speed of the object (particularly, the preceding vehicle, the parked vehicle, the pedestrian, a dropped object on a travel road 5, or the like) . For example, a millimeter-wave radar can be used as the radar 22. The radar 22 transmits a radio wave in an advancing direction of the vehicle 1, and receives a reflected wave that is generated when the object reflects the transmitted wave. Then, based on the transmitted wave and the received wave, the radar 22 measures a distance between the vehicle 1 and the object (for example, an inter-vehicular distance) and a relative speed of the object to the vehicle 1. In this embodiment, instead of the radar 22, a laser radar, an ultrasonic sensor, or the like may be used to measure the distance from the object and the relative speed of the object. Alternatively, plural types of sensors may be used to constitute a position and speed measuring device.

The camera 21 and the radar 22 correspond to an example of the "travel road information acquisition device" in the present invention.

The vehicle speed sensor 23 detects an absolute speed of the vehicle 1. The acceleration sensor 24 detects acceleration of the vehicle 1. This acceleration includes the acceleration and the deceleration in a longitudinal direction as well as the acceleration and the deceleration in a lateral direction. In the present specification, the acceleration and the deceleration may collectively and appropriately be referred to as "acceleration/deceleration".

The yaw rate sensor 25 detects a yaw rate of the vehicle 1. The steering angle sensor 26 detects a rotation angle (a steering angle) of a steering wheel of the vehicle 1. The ECU 10 executes a specified calculation on the basis of the absolute speed detected by the vehicle speed sensor 23 and the steering angle detected by the steering angle sensor 26, and can thereby acquire a yaw angle of the vehicle 1 (that is, an angle defined by the longitudinal direction of the vehicle 1 with respect to an x-axis, which will be described later) . The accelerator sensor 27 detects a depression amount of an accelerator pedal. The brake sensor 28 detects a depression amount of a brake pedal.

The positioning system 29 is a GPS system and/or a gyroscopic system, and detects the position (current vehicle position information) of the vehicle 1. The navigation system 30 stores map information therein, and can provide the map information to the ECU 10. Based on the map information and the current vehicle position information, the ECU 10 identifies a road, the intersection, the traffic signal, a building, and the like existing around (particularly, in the advancing direction of) the vehicle 1. The map information may be stored in the ECU 10. The navigation system 30 also corresponds to an example of the "travel road information acquisition device" in the present invention.

The engine control system 31 controls an engine of the vehicle 1. The engine control system 31 is a component capable of regulating engine output (drive power) and, for example, includes an ignition plug, a fuel injection valve, a throttle valve, a variable valve mechanism that changes opening/closing timing of intake/exhaust valves, and the like. When the vehicle 1 has to be accelerated or decelerated, the ECU 10 sends the control signal to the engine control system 31 so as to change the engine output.

The brake control system 32 controls a brake system of the vehicle 1. The brake control system 32 is a component capable of regulating a braking force of the brake system and, for example, includes a hydraulic pump, a valve unit, and the like. When the vehicle 1 has to be decelerated, the ECU 10 sends the control signal to the brake control system 32 so as to generate the braking force.

The steering control system 33 controls a steering device of the vehicle 1. The steering control system 33 is a component capable of regulating the steering angle of the vehicle 1 and, for example, includes an electric motor for an electric power steering system, and the like. When the advancing direction of the vehicle 1 has to be changed, the ECU 10 sends the control signal to the steering control system 33 so as to change a steering direction.

### [Basic Concept of Driving Assistance]

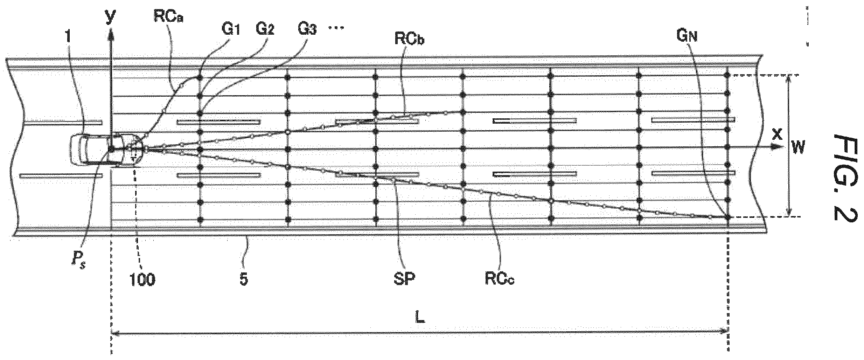

Next, a description will be made on a basic concept of driving assistance that is executed by the above-described ECU 10 in the embodiment of the present invention with reference to Fig. 2. Fig. 2 illustrates a situation where the vehicle 1 travels on the travel road 5.

First, the ECU 10 executes the calculation to identify the position of the vehicle 1 on the travel road 5 on the basis of travel road information. The travel road information is information on the travel road 5 where the vehicle 1 travels, and is acquired by the camera 21, the radar 22, the navigation system 30, and the like. For example, the travel road information includes information on a shape of the travel road (a straight road, a curved road, curvature of the curved road), a travel road width, the number of lanes, a lane width, and the like.

Next, the ECU 10 executes the calculation based on the travel road information, so as to set plural virtual grid points Gₙ (n = 1, 2, ...N) on the travel road 5 existing ahead in the advancing direction of the vehicle 1. In the case where an extending direction of the travel road 5 is defined as an x-direction and a width direction of the travel road 5 is defined as a y-direction, the grid points Gₙ are arranged in a lattice shape along the x-direction and the y-direction. An origin of x-y coordinates is set to a point corresponding to the position of the vehicle 1.

An area where the ECU 10 sets the grid points Gₙ is stretched in front of the vehicle 1 for a distance L along the travel road 5. The distance L is calculated on the basis of the speed of the vehicle 1 at the time of the calculation. In this embodiment, the distance L is a distance for which the vehicle 1 is expected to travel at a speed (V) during the calculation for a specified fixed time t (for example, three seconds) (L = V × t). However, the distance L may be a specified fixed distance (for example, 100 m) or a function of the speed (and the acceleration). In addition, a width W of the area where the grid points Gₙ are set is set to a substantially equal value to a width of the travel road 5. When the plural grid points Gₙ are set, just as described, the position of the vehicle 1 on the travel road 5 can be identified.

Here, the travel road 5 illustrated in Fig. 2 is a straight section, and thus the grid points Gₙ are arranged in a rectangular shape. The grid points Gₙ are arranged along the extending direction of the travel road. Thus, in the case where the travel road includes a curved section, the grid points Gₙ are arranged along curvature of the curved section.

Next, based on the travel road information, the ECU 10 executes calculation to set a travel route candidate RC (that is, a candidate that possibly becomes the target travel route where the vehicle 1 actually travels) . More specifically, the ECU 10 sets the plural travel route candidates RC by a route search using the state lattice method. In the state lattice method, the plural travel route candidates RC are set from the position of the vehicle 1 in a manner to be branched toward the grid points Gₙ existing in the advancing direction of the vehicle 1. In Fig. 2, travel route candidates RCₐ, RC_{b}, RC_{c} are illustrated as some of the plural travel route candidates RC set by the ECU 10.

The ECU 10 may set the travel route candidates RC on the basis of the obstacle information in addition to the travel road information. This obstacle information is information on presence or absence of the obstacle (for example, the preceding vehicle, the parked vehicle, the pedestrian, the dropped object, or the like) on the travel road 5 in the advancing direction of the vehicle 1, a moving direction thereof, a moving speed thereof, and the like, and is acquired by the camera 21 and the radar 22.

Next, as illustrated in Fig. 2, the ECU 10 sets plural sampling points SP along each of the travel route candidates RC, and calculates a route evaluation parameter value at each of the sampling points SP. Each of these sampling points SP is a discrete point (position), which is provided on the route of each of the travel route candidates RC and at which the route evaluation parameter value is calculated.
More specifically, for each of the plural travel route candidates RC, the ECU 10 calculates the route evaluation parameter value at each of the plural sampling points SP.

Next, based on the thus-calculated route evaluation parameter value of each of the plural travel route candidates RC, the ECU 10 selects a route with the minimum route evaluation parameter value from the plural travel route candidates RC, and sets such a route as the target travel route. Then, the ECU 10 sends the control signal to at least one of the engine control system 31, the brake control system 32, and the steering control system 33 such that the vehicle 1 travels along the set target travel route.

### [Calculation of Route Evaluation Parameter Value]

Next, a description will be made on the route evaluation parameter according to the embodiment of the present invention. Generally, the route evaluation parameter is defined according to plural factors such as the speed, the acceleration/deceleration in the longitudinal direction, the acceleration/deceleration in the lateral direction, a route change rate, and/or the obstacle. The route evaluation parameter may specifically be a parameter whose value is indicative of the suitability of a route, e.g. for achieving a given objective such as time efficiency, security, cost efficiency etc. Exemplarily, the suitability of the route may be inversely proportional to the value of the route evaluation parameter, so that the most suitable route minimizes the value of the route evaluation parameter. This embodiment is characterized by the route evaluation parameter that is defined according to the acceleration/deceleration in the longitudinal direction as one of plural types of such route evaluation parameters. A description will hereinafter be made on examples (first and second examples) of the route evaluation parameter according to the acceleration/deceleration in the longitudinal direction.

### (First Example)

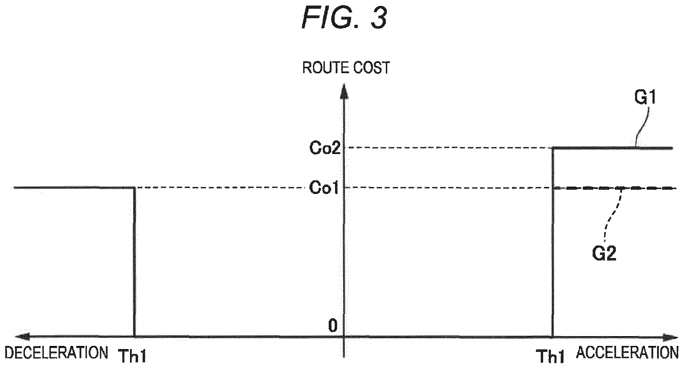

Fig. 3 is a map defining the route evaluation parameter (also referred to as "route cost") according to the first example of the embodiment of the present invention. In Fig. 3, a horizontal axis represents the acceleration and the deceleration, and a vertical axis represents the evaluation parameter or route cost. In addition, a graph G1 indicated by a solid line represents a map of the route evaluation parameter that is applied in the first example, and a graph G2 indicated by a broken line represents a map of the route evaluation parameter that is applied in a comparative example. The ECU 10 refers to the map as illustrated in Fig. 3 to determine the route evaluation parameter value at the sampling point SP, for which the route evaluation parameter value should be calculated, on the travel route candidate RC according to the acceleration and the deceleration generated at the sampling point SP.

In the first example, as indicated by the graph G1, in the case where the acceleration or the deceleration (the deceleration will be represented by an absolute value, and the same will be applied below) is lower than a first threshold Th1, the route evaluation parameter value is set to 0 (corresponding to the first specified value). This first threshold Th1 is defined on the basis of the acceleration/deceleration that can be accepted by a driver of the vehicle 1. For example, such a value that starts giving the driver a sense of discomfort at the time when the acceleration/deceleration exceeds this value is applied as the first threshold Th1.

In the first example, in the case where the acceleration/deceleration becomes equal to or higher than the first threshold Th1, the route evaluation parameter value is increased stepwise from 0 to a second specified value Co1 (a relatively high value as the route evaluation parameter value) . In this way, the high route evaluation parameter value is applied to the travel route where the relatively high acceleration/deceleration is generated, which hinders setting of such a travel route.

In particular, in the first example, in the case where the deceleration is equal to or higher than the first threshold Th1, the route evaluation parameter value is set to the second specified value Col. Meanwhile, in the case where the acceleration is equal to or higher than the first threshold Th1, the route evaluation parameter value is set to a third specified value Co2 that is even higher than the second specified value Col. That is, in the first example, in the case where the acceleration/deceleration is equal to or higher than the first threshold Th1, an amount of the route evaluation parameter value to be applied differs between the acceleration side and the deceleration side, more specifically, the higher route evaluation parameter value is set on the acceleration side than on the deceleration side. A reason therefor will be described in comparison with the comparative example (the graph G2).

In the comparative example, as indicated by the graph G2, in the case where the acceleration is equal to or higher than the first threshold Th1, the route evaluation parameter value is set to the second specified value Col as in the case where the deceleration is equal to or higher than the first threshold Th1. That is, in the comparative example, in the case where the acceleration/deceleration is equal to or higher than the first threshold Th1, the same value is set as the route evaluation parameter value to be applied on the acceleration side and the deceleration side.

Here, in both of the first example and the comparative example, the route evaluation parameter value is set by applying the first threshold Th1 to the acceleration/deceleration. Thus, generally, there is a tendency that the travel route where the acceleration/deceleration is relatively low is set. However, depending on a case, it is desired to set the travel route where the acceleration/deceleration is relatively high. An example of such a case is that the travel route is set in order to avoid the obstacle. In this case, it is expected that the plural travel road candidates RC are provided for the travel route where the acceleration/deceleration is equal to or higher than the first threshold Th1. Thus, the optimum travel route is preferably selected from such plural travel route candidates RC.

More specifically, it is expected that the plural travel route candidates RC where the acceleration or the deceleration becomes equal to or higher than the first threshold Th1 include the travel route that is set on the acceleration side (that is, the travel route where the acceleration equal to or higher than the first threshold Th1 is generated) and the travel route that is set on the deceleration side (that is, the travel route where the deceleration equal to or higher than the first threshold Th1 is generated) . In this case, it is desired that the travel route that is set on the deceleration side is selected preferentially over the travel route that is set on the acceleration side. This is because the vehicle speed is not increased on the travel route that is set on the deceleration side in comparison with the travel route that is set on the acceleration side, and thus a degree of danger to the vehicle 1 is low.

However, in the comparative example, the route evaluation parameter value is set to the same value (the second specified value Co1) in both the case where the acceleration is equal to or higher than the first threshold Th1 and the case where the deceleration is equal to or higher than the first threshold Th1. Accordingly, it is impossible to preferentially select the travel route that is set on the deceleration side over the travel route that is set on the acceleration side from the plural travel route candidates RC where the acceleration or the deceleration is equal to or higher than the first threshold Th1.

Meanwhile, in the first example, the route evaluation parameter value is set to the different value between the case where the acceleration is equal to or higher than the first threshold Th1 and the case where the deceleration is equal to or higher than the first threshold Th1. More specifically, the route evaluation parameter value that is applied in the case where the acceleration is equal to or higher than the first threshold Th1 is set to be higher than the route evaluation parameter value that is applied in the case where the deceleration is equal to or higher than the first threshold Th1 (the third specified value Co2 > the second specified value Co1). According to such a first example, among the plural travel route candidates RC where the acceleration or the deceleration is equal to or higher than the first threshold Th1, the route evaluation parameter value of the travel route that is set on the acceleration side tends to be higher than the route evaluation parameter value
of the travel route that is set on the deceleration side, in other words, the route evaluation parameter value of the travel route that is set on the deceleration side tends to be lower than the route evaluation parameter value of the travel route that is set on the acceleration side. As a result, it is possible to preferentially select the travel route that is set on the deceleration side over the travel route that is set on the acceleration side from the plural travel route candidates RC where the acceleration or the deceleration is relatively high.

### (Second Example)

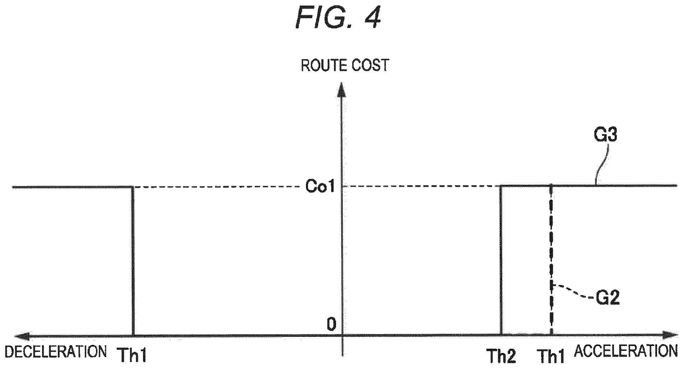

Next, Fig. 4 is a map defining the route evaluation parameter (also referred to as "route cost") according to the second example of the embodiment of the present invention. Also, in Fig. 4, a horizontal axis represents the acceleration and the deceleration, and a vertical axis represents the evaluation parameter or route cost. In addition, a graph G3 indicated by a solid line represents a map of the route evaluation parameter that is applied in the second example, and a graph G2 indicated by a broken line represents a map of the route evaluation parameter that is applied in the same comparative example as that in Fig. 3. The ECU 10 refers to the map as illustrated in Fig. 4 to determine the route evaluation parameter value at the sampling point SP, for which the route evaluation parameter value should be calculated, on the travel route candidate RC according to the acceleration and the deceleration generated at the sampling point SP.

In the second example, as indicated by the graph G3, on the deceleration side, similar to the first example and the comparative example, in the case where the deceleration is lower than the first threshold Th1, the route evaluation parameter value is set to 0 (corresponding to the first specified value). Meanwhile, in the case where the deceleration is equal to or higher than the first threshold Th1, the route evaluation parameter value is set to the second specified value Col.

Meanwhile, in the second example, on the acceleration side, differing from the first example and the comparative example, in the case where the acceleration is lower than a second threshold Th2 that is lower than the first threshold Th1, the route evaluation parameter value is set to 0. Meanwhile, in the case where the acceleration is equal to or higher than the second threshold Th2, the route evaluation parameter value is set to the second specified value Col. That is, in the second example, instead of making the amount of the route evaluation parameter value differ between the acceleration side and the deceleration side as in the first example (in the second example, only the second specified value Col is used as the route evaluation parameter value), the threshold, which increases the route evaluation parameter value stepwise according to the acceleration/deceleration, differs between the acceleration side and the deceleration side, more specifically, the threshold is lower on the acceleration side than the deceleration side (the second threshold Th2 < the first threshold Th1).

Just as described, in the second example, the second threshold Th2 that is applied on the acceleration side is lower than the first threshold Th1 that is applied on the deceleration side. That is, the value of the acceleration/deceleration at which the route evaluation parameter value is increased stepwise from 0 to the second specified value Col is lower on the acceleration side than on the deceleration side. Accordingly, on the acceleration side, the route evaluation parameter value is set to the second specified value Col at the lower acceleration/deceleration than that on the deceleration side. In other words, the route evaluation parameter value starts being set to the second specified value Col at the lower acceleration/deceleration on the acceleration side than on the deceleration side.

Thus, according to the second example, in the case where the travel route where the acceleration or the deceleration is relatively high is set, among the plural travel route candidates RC as the candidates thereof, the route evaluation parameter value of the travel route that is set on the acceleration side tends to be higher than the route evaluation parameter value of the travel route that is set on the deceleration side, in other words, the route evaluation parameter value of the travel route that is set on the deceleration side tends to be lower than the route evaluation parameter value of the travel route that is set on the acceleration side. Therefore, also in the second example, it is possible to preferentially select the travel route that is set on the deceleration side over the travel route that is set on the acceleration side from the plural travel route candidates RC where the acceleration or the deceleration is relatively high.

### [Driving Assistance Processing]

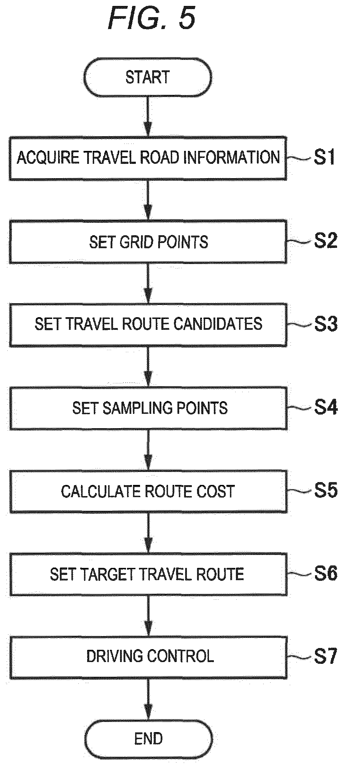

Next, Fig. 5 is a flowchart of driving assistance processing according to the embodiment of the present invention. This processing is repeatedly executed in specified cycles (for example, every 0.05 to 0.2 seconds) by the ECU 10.

First, in step S1, the ECU 10 acquires the travel road information from the camera 21, the radar 22, and the navigation system 30.

Next, in step S2, the ECU 10 identifies the shape of the travel road 5 (for example, the extending direction of the travel road 5, the width of the travel road 5, and the like) on the basis of the travel road information, and sets the plural grid points Gₙ (n = 1, 2, ...N) on the travel road 5. For example, the ECU 10 sets the grid point Gₙ at every 10 m in the x-direction and at every 0.875 m in the y-direction.

Next, in step S3, the ECU 10 sets the plural travel route candidates RC by the route search using the state lattice method on the basis of the travel road information. More specifically, the ECU 10 sets the plural travel route candidates RC in the manner to be branched from the position of the vehicle 1 toward the grid points Gₙ existing in the advancing direction of the vehicle 1. The ECU 10 may set the travel route candidates RC on the basis of the obstacle information in addition to the travel road information.

Next, in step S4, the ECU 10 sets the plural sampling points SP along each of the travel route candidates RC. For example, on each route of the travel route candidates RC, the ECU 10 sets the sampling points SP at equally-spaced intervals (every 0.2 m in an example) in the x-direction.

Next, in step S5, the ECU 10 calculates the route evaluation parameter value of each of the plural travel route candidates RC. More specifically, for each of the plural travel route candidates RC, the ECU 10 calculates the route evaluation parameter value at each of the plural sampling points SP. Then, the ECU 10 calculates the route evaluation parameter value, which is applied to the travel route candidate RC, from the plural route evaluation parameter values that are calculated at the plural sampling points SP in the single travel route candidate RC. For example, the ECU 10 sets an average value of the plural route evaluation parameter values at the plural sampling points SP as the route evaluation parameter value of the single travel route candidate RC. In this way, the ECU 10 calculates the route evaluation parameter value of all of the plural travel route candidates RC.

In some examples, when calculating the route evaluation parameter value at each of the sampling points SP, the ECU 10 calculates the plural types of the route evaluation parameter value, such as the route evaluation parameter value that is defined according to the speed, the route evaluation parameter value that is defined according to the acceleration/deceleration in the longitudinal direction, the route evaluation parameter value that is defined according to the acceleration/deceleration in the lateral direction, the route evaluation parameter value that is defined according to the route change rate, and the route evaluation parameter value that is defined according to the obstacle. Then, the ECU 10 calculate the route evaluation parameter value, which is finally applied at each of the sampling points SP, by weighing each of the thus-acquired plural types of the route evaluation parameter value, for example. In other examples, only the route evaluation parameter that is defined according to the acceleration/deceleration in the longitudinal direction is used.

In particular, in this embodiment, in the case where the ECU 10 calculates the route evaluation parameter value on the basis of the acceleration/deceleration in the longitudinal direction, the ECU 10 refers to the map illustrated in Fig. 3 or Fig. 4 to calculate the route evaluation parameter value. In regard to the sampling point SP as a target, for which the route evaluation parameter value is calculated, the ECU 10 uses a specified model, a calculation formula, and the like to calculate the acceleration/deceleration in the longitudinal direction that is generated at the time when the vehicle 1 passes the sampling point SP, and sets the route evaluation parameter value according to this acceleration/deceleration. More specifically, in the case where the first example is implemented (see Fig. 3) and the acceleration/deceleration is lower than the first threshold Th1, the ECU 10 sets the route evaluation parameter value to 0. In the case where the deceleration is equal to or higher than the first threshold Th1, the ECU 10 sets the route evaluation parameter value to the second specified value Co1. In the case where the acceleration is equal to or higher than the first threshold Th1, the ECU 10 sets the route evaluation parameter value to the third specified value Co2 (> the second specified value Co1). Meanwhile, in the case where the second example is implemented (see Fig. 4) and the deceleration is lower than the first threshold Th1, the ECU 10 sets the route evaluation parameter value to 0. In the case where the deceleration is equal to or higher than the first threshold Th1, the ECU 10 sets the route evaluation parameter value to the second specified value Col. In the case where the acceleration is lower than the second threshold Th2 (< the first threshold Th1), the ECU 10 sets the route evaluation parameter value to 0. In the case where the acceleration is equal to or higher than the second threshold Th2, the ECU 10 sets the route evaluation parameter value to the second specified value Co1.

Next, in step S6, the ECU 10 sets the target travel route. More specifically, the ECU 10 selects the route with the minimum route evaluation parameter value from the plural travel route candidates RC on the basis of the route evaluation parameter value of each of the plural travel route candidates RC calculated as described above, and sets such a route as the target travel route.

Next, in step S7, the ECU 10 executes driving control (vehicle behavior control) including speed control and/or steering control of the vehicle 1 such that the vehicle 1 travels along the target travel route. More specifically, the ECU 10 sends the control signal to at least one of the engine control system 31, the brake control system 32, and the steering control system 33 and executes at least one of the engine control, braking control, and the steering control.

### [Operation and Effects]

Next, a description will be made on an operation and effects according to the embodiment of the present invention.

In the first example of this embodiment, in the vehicle driving assistance system 100 that sets the plural travel route candidates RC on the basis of the travel road information acquired from the camera 21 and the like, calculates the route evaluation parameter value for each of these plural travel route candidates RC, and sets the target travel route from the plural travel route candidates RC on the basis of this route evaluation parameter value, the ECU 10 sets the route evaluation parameter value to 0 in the case where the acceleration/deceleration is lower than the first threshold Th1, sets the route evaluation parameter value to the second specified value Col in the case where the deceleration is equal to or higher than the first threshold Th1, and sets the route evaluation parameter value to the third specified value Co2 (> the second specified value Co1) in the case where the acceleration is equal to or higher than the first threshold Th1.

According to such a first example of this embodiment, the route evaluation parameter value that is applied when the acceleration is equal to or higher than the first threshold Th1 is set to be higher than the route evaluation parameter value that is applied when the deceleration is equal to or higher than the first threshold Th1. Accordingly, in the case where the travel route where the acceleration or the deceleration is relatively high is set, among the plural travel route candidates RC as the candidates thereof, the route evaluation parameter value of the travel route that is set on the acceleration side tends to be higher than the route evaluation parameter value of the travel route that is set on the deceleration side. Thus, according to the first example of this embodiment, it is possible to preferentially select the travel route that is set on the deceleration side over the travel route that is set on the acceleration side in the case where the travel route where the acceleration or the deceleration is relatively high is set. Therefore, it is possible to appropriately select the travel route where safety of the vehicle 1 is further secured.

Meanwhile, in the second example of this embodiment, in the case where the deceleration is lower than the first threshold Th1, the ECU 10 sets the route evaluation parameter value to 0. In the case where the deceleration is equal to or higher than the first threshold Th1, the ECU 10 sets the route evaluation parameter value to the second specified value Co1. In the case where the acceleration is lower than the second threshold Th2 (< the first threshold Th1), the ECU 10 sets the route evaluation parameter value to 0. In the case where the acceleration is equal to or higher than the second threshold Th2, the ECU 10 sets the route evaluation parameter value to the second specified value Co1.

According to such a second example of this embodiment, on the acceleration side, the route evaluation parameter value is set to the second specified value Co1 at the lower acceleration/deceleration than that on the deceleration side. Accordingly, in the case where the travel route where the acceleration or the deceleration is relatively high is set, among the plural travel route candidates RC as the candidates thereof, the route evaluation parameter value of the travel route that is set on the acceleration side tends to be higher than the route evaluation parameter value of the travel route that is set on the deceleration side. Thus, also according to the second example of this embodiment, it is possible to preferentially select the travel route that is set on the deceleration side over the travel route that is set on the acceleration side in the case where the travel route where the acceleration or the deceleration is relatively high is set. Therefore, it is possible to appropriately select the travel route where the safety of the vehicle 1 is further secured.

In addition, in this embodiment, the first threshold Th1 is defined on the basis of the magnitude of the acceleration/deceleration that can be accepted by the driver of the vehicle 1. Accordingly, the high route evaluation parameter value is applied to the travel route where the acceleration/deceleration that is equal to or higher than this first threshold Tl is generated, and setting of such a travel route is hindered. As a result, it is possible to suppress the driver from receiving the sense of discomfort caused by the acceleration/deceleration.

Furthermore, in this embodiment, the first specified value is applied with 0. That is, the route evaluation parameter value related to the acceleration/deceleration is not substantially applied to the travel route where the acceleration/deceleration is lower than the first threshold Th1. Thus, it is possible to preferentially set the travel route where the acceleration/deceleration is lower than the first threshold Th1.

### [Modified Examples]

In the above-described embodiment, the first specified value is applied with 0. However, the first specified value is not limited to being applied with 0. That is, a value that is at least lower than the second specified value Col, in particular, a value that is much lower than the second specified value Col is preferably set as the first specified value. Thus, the first specified value is not limited to being set to 0.

In the above-described embodiment, the first threshold Th1 is used in both of the first and second examples. However, the value that is applied as the first threshold Th1 may differ between the first and second examples . In addition, the second specified value Col is used in both of the first and second examples. However, the value that is applied as the second specified value Co1 may differ between the first and second examples.

Furthermore, in the above-described embodiment, an example in which the present invention is applied to the vehicle 1 having the engine as a drive source has been described (see Fig. 1). However, the present invention can also be applied to a vehicle having an electric motor as the drive source (an electric vehicle or a hybrid vehicle). Moreover, in the above-described embodiment, the braking force is applied to the vehicle 1 by the brake system (the brake control system 32). However, in another example, the braking force may be applied to the vehicle by regeneration of the electric motor.

### [Description of Reference Signs and Numerals]

- 1:: Vehicle
- 5:: Travel road
- 10:: ECU
- 21:: Camera
- 22:: Radar
- 30:: Navigation System
- 100:: Vehicle driving assistance system
- Gn:: Grid point
- RC:: Route candidate
- SP:: Sampling point

## Claims

1. A vehicle driving assistance system (100) comprising:
a travel road information acquisition device that acquires travel road information on a travel road (5) of a vehicle (1); and
a controller (10) configured to set a target travel route for the vehicle (1) in the travel road (5) on the basis of the travel road information and to execute driving control of the vehicle (1) such that the vehicle (1) travels along the target travel route, wherein
the controller (10) is configured to:
set plural travel route candidates (RC) as candidates for setting the target travel route on the basis of the travel road information;
calculate a route evaluation parameter value for each of the plural travel route candidates (RC); and
select one travel route of the plural travel route candidates (RC) as the target travel route on the basis of the route evaluation parameter value, and
the controller (10) is further configured to:
set the route evaluation parameter value to a first specified value in the case where a magnitude of acceleration or deceleration that is generated in a longitudinal direction at the time when the vehicle (1) travels on the travel route candidate is lower than a first threshold; and
set the route evaluation parameter value to a second specified value that is higher than the first specified value in the case where the magnitude of the deceleration is equal to or higher than the first threshold, and
set the route evaluation parameter value to a third specified value that is higher than the second specified value in the case where the magnitude of the acceleration is equal to or higher than the first threshold.

2. A vehicle driving assistance system (100) comprising:
a travel road information acquisition device that acquires travel road information on a travel road (5) of a vehicle (1); and
a controller (10) configured to set a target travel route for the vehicle (1) in the travel road (5) on the basis of the travel road information, wherein
the controller (10) is configured to:
set plural travel route candidates (RC) as candidates for setting the target travel route on the basis of the travel road information;
calculate a route evaluation parameter value for each of the plural travel route candidates (RC); and
select one travel route of the plural travel route candidates (RC) as the target travel route on the basis of the route evaluation parameter value, and
the controller (10) is further configured to:
set the route evaluation parameter value to a first specified value in the case where a magnitude of deceleration that is generated in a longitudinal direction at the time when the vehicle (1) travels on the travel route candidate (RC) is lower than a first threshold, and set the route evaluation parameter value to a second specified value that is higher than the first specified value in the case where the magnitude of the deceleration is equal to or higher than the first threshold; and
set the route evaluation parameter value to the first specified value in the case where a magnitude of acceleration that is generated in the longitudinal direction at the time when the vehicle (1) travels on the travel route candidate (RC) is lower than a second threshold that is lower than the first threshold, and set the route evaluation parameter value to the second specified value in the case where the magnitude of the acceleration is equal to or higher than the second threshold.

3. The vehicle driving assistance system (100) according to claim 1 or 2, wherein
the first threshold is defined on the basis of a magnitude of the acceleration/deceleration that can be accepted by a driver of the vehicle (1).

4. The vehicle driving assistance system (100) according to any one of the preceding claims, wherein
the first specified value is 0.

5. The vehicle driving assistance system (100) according to any one of the preceding claims, wherein
the controller (10) is configured to set plural sampling points (SP) on the route of each of the plural travel route candidates (RC), and to set the route evaluation parameter value at each of the sampling points (SP) set for each of the plural travel route candidates (RC) on the basis of the magnitude of the acceleration or the deceleration.

6. The vehicle driving assistance system (100) according to any one of the preceding claims, wherein
the controller (10) is further configured to set the plural travel route candidates (RC) on the basis of obstacle information in addition to the travel road information.

7. A vehicle driving assistance method executed by a controller (10) including a computer, the vehicle driving assistance method comprising:
a step of setting plural travel route candidates (RC) as candidates for setting a target travel route for a vehicle (1) in a travel road (5) on the basis of travel road information on the travel road (5) of the vehicle (1);
a step of calculating a route evaluation parameter value for each of the plural travel route candidates (RC);
a step of selecting one travel route of the plural travel route candidates (RC) as the target travel route on the basis of the route evaluation parameter value; and
a step of executing driving control of the vehicle (1) such that the vehicle (1) travels along the target travel route, and
in the step of calculating the route evaluation parameter value, the method further comprises:
setting the route evaluation parameter value to a first specified value in the case where a magnitude of acceleration or deceleration that is generated in a longitudinal direction at the time when the vehicle travels on the travel route candidate is lower than a first threshold; and
setting the route evaluation parameter value to a second specified value that is higher than the first specified value in the case where the magnitude of the deceleration is equal to or higher than the first threshold, and setting the route evaluation parameter value to a third specified value that is larger than the second specified value in the case where the magnitude of the acceleration is equal to or higher than the first threshold.

8. A vehicle driving assistance method executed by a controller (10) including a computer, the vehicle driving assistance method comprising:
a step of setting plural travel route candidates (RC) as candidates for setting a target travel route for a vehicle (1) in a travel road (5) on the basis of travel road information on the travel road (5) of the vehicle (1);
a step of calculating a route evaluation parameter value for each of the plural travel route candidates (RC);
a step of selecting one travel route of the plural travel route candidates (RC) as the target travel route on the basis of the route evaluation parameter value; and
a step of executing driving control of the vehicle (1) such that the vehicle (1) travels along the target travel route, and
in the step of calculating the route evaluation parameter value, the method further comprises:
setting the route evaluation parameter value to a first specified value in the case where a magnitude of deceleration that is generated in a longitudinal direction at the time when the vehicle (1) travels on the travel route candidate is lower than a first threshold, and setting the route evaluation parameter value to a second specified value that is higher than the first specified value in the case where the magnitude of the deceleration is equal to or higher than the first threshold; and
setting the route evaluation parameter value to the first specified value in the case where a magnitude of acceleration that is generated in the longitudinal direction at the time when the vehicle (1) travels on the travel route candidate is lower than a second threshold that is lower than the first threshold, and setting the route evaluation parameter value to the second specified value in the case where the magnitude of the acceleration is equal to or higher than the second threshold.

9. The vehicle driving assistance method according to claim 7 or 8, wherein
the first threshold is defined on the basis of a magnitude of the acceleration/deceleration that can be accepted by a driver of the vehicle (1).

10. The vehicle driving assistance method according to any one of the claims 7 to 9, wherein
the first specified value is 0.

11. The vehicle driving assistance method according to any one of the claims 7 to 10 further comprising
setting plural sampling points (SP) on the route of each of the plural travel route candidates (RC), and setting the route evaluation parameter value at each of the sampling points (SP) set for each of the plural travel route candidates (RC) on the basis of the magnitude of the acceleration or the deceleration.

12. The vehicle driving assistance method according to any one of the claims 7 to 11, further comprising
setting the plural travel route candidates (RC) on the basis of obstacle information in addition to the travel road information.

13. A computer program product comprising computer-readable instructions, which, when executed by a computer, cause the computer to carry out the method of any one of claims 7 to 12.
